(19) Europäisches Patentamt
European Patent Office
Office européen des brevets

(11) **EP 3 616 342 B1**

(12) **EUROPÄISCHE PATENTSCHRIFT**

(45) Veröffentlichungstag und Bekanntmachung des Hinweises auf die Patenterteilung:
**21.08.2024   Patentblatt 2024/34**

(21) Anmeldenummer: **18714740.0**

(22) Anmeldetag: **22.03.2018**

(51) Internationale Patentklassifikation (IPC):
**H04J 3/06** (2006.01)       **H04W 56/00** (2009.01)

(52) Gemeinsame Patentklassifikation (CPC):
**H04J 3/065; H04W 56/0015**

(86) Internationale Anmeldenummer:
**PCT/EP2018/057309**

(87) Internationale Veröffentlichungsnummer:
**WO 2018/197119 (01.11.2018 Gazette 2018/44)**

(54) **VORRICHTUNGEN, VERFAHREN UND COMPUTERPROGRAMME ZUM ERMITTELN UND ÜBERTRAGEN EINER ZEITBASIS IN EINEM MOBILKOMMUNIKATIONSSYSTEM, SYSTEM ZUM ZEITSYNCHRONEN ABTASTEN**

DEVICES, METHODS AND COMPUTERPROGRAMMS FOR DETERMINING AND TRANSMITTING A TIME BASE IN A MOBILE COMMUNICATION SYSTEM, AND SYTEM FOR TIME SYNCHRONOUS SAMPLING

DISPOSITIF, PROCÉDÉE ET LOGICIELS D'ORDINATUER POUR DETERMINATION ET TRANSMISSIN D'UNE BASE DE TEMPEROLLE DANS UN SYSTÈME MOBILE DE COMMUNICATION, ET SYSTÈME D'ÉCHANTILLONAGE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2017   DE 102017108765**

(43) Veröffentlichungstag der Anmeldung:
**04.03.2020   Patentblatt 2020/10**

(73) Patentinhaber: **Smart Mobile Labs AG
81379 München (DE)**

(72) Erfinder: **ACHER, Georg
81549 München (DE)**

(74) Vertreter: **2SPL Patentanwälte PartG mbB
Landaubogen 3
81373 München (DE)**

(56) Entgegenhaltungen:
**US-A1- 2009 006 882      US-A1- 2011 216 660
US-A1- 2016 165 558      US-A1- 2016 345 281**

- **CATT: "Consideration on DFN offset", vol. RAN WG2, no. Athen, Greece; 20170213 - 20170217, 12 February 2017 (2017-02-12), XP051211914, Retrieved from the Internet <URL:http://www.3gpp.org/ftp/Meetings_3GPP_SYNC/RAN2/Docs/> [retrieved on 20170212]**
- **ERICSSON ET AL: "Extending DRX cycles beyond the current SFN range", vol. RAN WG2, no. Barcelona, Spain; 20130819 - 20130823, 10 August 2013 (2013-08-10), XP050718530, Retrieved from the Internet <URL:http://www.3gpp.org/ftp/tsg_ran/WG2_RL2/TSGR2_83/Docs/> [retrieved on 20130810]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Ausführungsbeispiele stellen Vorrichtungen, Verfahren und Computerprogramme zum Ermitteln und Übertragen in einem Mobilkommunikationssystem und ein System zum zeitsynchronen Abtasten bereit, insbesondere aber nicht ausschließlich, stellen Ausführungsbeispiele ein Konzept zur zeitlichen Synchronisation von mobile Sendeempfängern basierend auf einer gemeinsamen und von einer Basisstation übermittelten Zeitbasis bereit.

Mobilkommunikationssysteme stehen vor immer neuen Herausforderungen: Moderne Smartphones (intelligente portable Endgeräte) ermöglichen die Nutzung einer Vielzahl neuer Dienste, wie z.B. Online-Navigation, Musik- oder Videostreaming, Online-Kommunikation und mobiles Internet. Da diese Dienste oft einen großen Teil der Funktionalität eines Smartphones ausmachen, müssen die Netzbetreiber versuchen, eine möglichst weite Abdeckung eines Mobilkommunikationssystems zu erreichen. Bei einigen Anwendungen werden von mehreren Mobilen aus Messungen durchgeführt, deren Messergebnisse dann im Nachhinein wieder zusammengeführt werden. Je nach Art der Messungen und der Abtastrate können dabei unerwünschte Effekte auftreten, wenn die Messtakte der messenden Mobilen nicht synchron sind.

Das Dokument US 2011216660 A1 mit dem Titel "SYNCHRONISATION IN A WIRELESS NODE" erörtert das Folgende: Ein drahtloser Knoten empfängt eine Bake von eines drahtlosen Zugangspunkts. Die Bake enthält einen Zeitstempel der Zeitsynchronisationsfunktion (TSF) eines Protokolls, der mit Bezug auf eine globale Uhr für ein Netzwerk erzeugt wurde. Der drahtlose Knoten synchronisiert einen Zähler gemäß dem TSF-Zeitstempel. Der drahtlose Knoten empfängt ein GTO-Paket (Global Timing Offset) von dem drahtlosen Zugangspunkt und kombiniert das GTO-Paket mit einem Zählerwert, um einen globalen Zeitstempel zu erzeugen.

Das Dokument US 2009006882 A1 mit dem Titel "Method and Apparatus for Wireless Clock Regeneration" erörtert Verfahren und Systeme zum Betrieb eines drahtlosen Taktsystems für die Übertragung und Anzeige von Multimedia-Datenströmen. Quelltaktrahmen werden mit einem Referenztaktrahmen verglichen und die Taktdifferenz wird an einen drahtlosen Taktempfänger übertragen, der ebenfalls die gleichen Referenztaktrahmen empfängt. Die Quellentaktrahmen werden unter Verwendung der Referenztaktrahmen, der Taktdifferenzinformationen und des lokalen Taktsystems des Empfängers rekonstruiert.

Die Druckschrift US 2016165558 A1 mit dem Titel "TECHNIQUES FOR SYNCHRONIZING TIMING OF WIRELESS STREAMING TRANSMISSIONS TO MULTIPLE SINK DEVICES" offenbart Verfahren, Systeme, Vorrichtungen und Geräte zur Synchronisierung des Timings von drahtlosen Streaming-Übertragungen an mehrere Empfangsgeräte. Ein Quellgerät kann Timing-Informationen identifizieren, die mit einer gemeinsamen Timing-Quelle verbunden sind, z.B. einer Medien-Timing-Quelle auf Multimedia-Ebene oder einer Wi-Fi-Timing-Quelle, und die Timing-Informationen an die Empfangsgeräte senden. Die Empfangsgeräte können die Timing-Informationen empfangen und eine zusammengesetzte Timing-Verzögerung bestimmen, z. B. eine Verzögerung der drahtlosen Übertragungsverbindung, eine Verzögerung der internen Schnittstellenverbindung oder Kombinationen davon. Das Quellgerät kann den Inhalt zu den Empfangsgeräten streamen, die ein lokal angepasstes Zeitsignal verwenden können, um die Darstellung des Inhalts zu synchronisieren.

Die Veröffentlichung US 2016345281 A1 diskutiert Methoden und Systeme zur Verteilung von Zeitinformationen in Mobilfunknetzwerken. Grobe Zeitinformationen werden mit herkömmlichen Signalisierungstechniken von Basisstationen an Mobilgeräte verteilt. Feinere Zeitinformationen werden von Basisstationen an Mobilgeräte verteilt, indem feinere Zeitinformationen verwendet werden, um ein Trägersignal zu modulieren.

Das Dokument R2-1701238 mit dem Titel "Consideration on DFN offset" schlägt vor, dass eine Mobile eine SFN (System Frame Number) und einen DFN-Offset (Direct Frame Number) benutzt, um eine GNSS-DFN (Global Navigation Satellite System) aus der Summe der SFN und dem DFN-Offset zu bestimmen.

In der Druckschrift WO 2015126956 A1 mit dem Titel "SYNCHRONISATION OF AUDIO CHANNEL TIMING" wird die Synchronisierung mehrerer Ausgänge von Daten, die durch ein drahtloses Netzwerk transportiert werden, beschrieben.

Es besteht daher der Bedarf, ein verbessertes Konzept zur Synchronisation von Messungen von mobilen Sendeempfängern in einem Mobilkommunikationssystem bereitzustellen.

Diesem Bedarf wird durch eine Vorrichtung zur Ermittlung einer Zeitbasis in einem mobilen Sendeempfänger gemäß einem der Ansprüche 1 bis 7 eine Vorrichtung zur Übertragung einer Zeitbasis von einem Basisstations-Sendeempfänger an einen mobilen Sendeempfänger gemäß einem der Ansprüche 8 bis 10, ein System zum zeitsynchronen Abtasten gemäß Anspruch 11, Verfahren zur Ermittlung und Übertragung einer Zeitbasis gemäß den Ansprüchen 12 und 13 sowie durch ein Computerprogramm gemäß Anspruch 14 Rechnung getragen.

Ausführungsbeispiele basieren auf der Erkenntnis, dass ein Sampletakt (auch Abtasttakt) auf mehreren Geräten synchron sein sollte, um mit mehreren Geräten hochwertige digitale Messungen (beispielsweise Audioaufnahmen (Audiosamples), Videoaufnahmen, o.ä.) zu machen. Die Sampletakte der Geräte sollten daher zusammengeführt werden, d.h. sie sollten in der Frequenz dauerhaft gleich/identisch sein und sollten zwischen den Geräten/Kanälen keine bzw. nur eine geringe Phasenabweichung haben. Wünschenswert wären zeitliche Abweichungen kleiner 1us.

Es ist eine weitere Erkenntnis, dass dies effektiv bedeutet, dass jedes Gerät zum exakt selben Zeitpunkt einen analogen Wert abtasten sollte, genauso wie es bei einer rein analogen Weiterleitung der Fall wäre. Bei ungleicher bzw. sich verändernder Samplefrequenz würden im Laufe der Zeit Samples fehlen bzw. zu viel sein und damit bei der Zusammenführung mehrerer Kanäle beispielsweise Knackser oder Schwebungen entstehen. Dies könnte zwar mit adaptivem Resampling (adaptive Umtastung/Abtastungsänderung) ausgeglichen werden, allerdings ist das bei hochwertigen Aufnahmen unerwünscht und bei asynchroner Übertragung mit Ungenauigkeiten behaftet.

Durch die Forderung nach geringem Phasenversatz kann eine Mikrophonierung exakt wie auf analogem Wege genutzt werden, d.h. Sampleverzögerungen entstehen nur durch Laufzeiten des Schalls. Bei digitalen Audioschnittstellen, beispielsweise S/PDIF (von Sony/Philipps Digital Interface), AES/EBU 3 (von Audio Engineering Society/Europäische Rundfunk/Broadcast-Union), MADI (von Multichannel Audio Digital Interface, digitale Mehrkanalaudioschnittstelle), wird diese Anforderung dadurch realisiert, dass ein zentraler Sampletakt (=Worldclock) an alle Geräte per Kabel verteilt wird. Diese leiten daraus ihre internen Timings/Sampletakt ab. Für Audiogeräte, die über asynchrone Netzwerke (z.B. Audio over Internet Protocol (IP)) arbeiten, kann diese Forderung etwas erweitert werden. Zu der rein elektrischen synchronen Generierung der Sampletakte kann auch das Wissen um den numerischen Wert bezogen auf eine absolute Zeitbasis genutzt werden. D.h. jedes Sample kann auf eine absolute Zeit referenziert werden. Damit können in einer asynchronen Weiterverarbeitung von Paketen mit Sampledaten mehrerer Quellen genau die Samples desselben Samplezeitpunktes (Timestamps) ausgewählt und somit wieder eine Samplesynchronisierung erreicht werden.

Ausführungsbeispiele schaffen eine Vorrichtung zur Ermittlung einer Zeitbasis in einem mobilen Sendeempfänger in einem Mobilkommunikationssystem. Das Mobilkommunikationssystem umfasst zumindest einen Basisstations-Sendeempfänger und der mobile Sendeempfänger ist ausgebildet, um Information in sich wiederholenden Funkrahmen mit dem Basisstations-Sendeempfänger auszutauschen. Die Vorrichtung umfasst zumindest eine Schnittstelle, die ausgebildet ist, um mit dem zumindest einen Basisstations-Sendeempfänger des Mobilkommunikationssystems zu kommunizieren. Die Vorrichtung umfasst ferner ein Kontrollmodul, das ausgebildet ist, um die Schnittstelle zu kontrollieren und eine Synchronisation mit den sich wiederholenden Funkrahmen herzustellen. Das Kontrollmodul ist darüber hinaus ausgebildet um einen Zähler inkrementell zu erhöhen und eine Nachricht von dem zumindest einen Basisstations-Sendeempfänger zu erhalten. Die Nachricht umfasst Information über eine lokale Zeitreferenz an dem Basisstations-Sendeempfänger. Das Kontrollmodul ist ausgebildet, um den Zähler basierend auf der Information über die lokale Zeitreferenz anzupassen und so die Zeitbasis zu ermitteln. Die lokale Zeitreferenz kann dabei eine höhere Synchronisationsgenauigkeit aufweisen als die Funkrahmen selbst, beispielsweise kann die Genauigkeit 1/10000, 1/5000, 1/1000, 1/500 der Funkrahmendauer betragen.

Ausführungsbeispiele schaffen darüber hinaus eine Vorrichtung zur Übertragung einer Zeitbasis von einem Basisstations-Sendeempfänger an einen mobilen Sendeempfänger in einem Mobilkommunikationssystem. Die Vorrichtung umfasst zumindest ein Sendeempfangsmodul, das ausgebildet ist, um mit dem zumindest einen mobilen Sendeempfänger zu kommunizieren. Die Vorrichtung umfasst ferner ein Kontrollmodul, das ausgebildet ist, um das Sendeempfangsmodul zu kontrollieren und um über das Sendeempfangsmodul Information in sich wiederholenden Funkrahmen mit dem mobilen Sendeempfänger auszutauschen. Das Kontrollmodul ist ferner ausgebildet, um eine Nachricht von dem zumindest einen Basisstations-Sendeempfänger an den mobilen Sendeempfänger zu senden, wobei die Nachricht Information über eine lokale Zeitreferenz relativ zu den sich wiederholenden Funkrahmen umfasst, und so die Zeitbasis bereitzustellen.

Ausführungsbeispiele können so eine gemeinsame Zeitbasis zwischen Basisstations-Sendeempfänger und mobilem Sendeempfänger ermöglichen, die über eine Granularität der Funkrahmen selbst hinaus geht. Diese Zeitbasis kann genauer sein, als die Funkrahmen (frames), s.o.

In einigen weiteren Ausführungsbeispielen kann die Information über die lokale Zeitreferenz einen absoluten Zeitstempel und eine Identifikationsinformation über einen zu dem absoluten Zeitstempel in zeitlicher Relation stehenden Funkrahmen enthalten. Ausführungsbeispiele können so eine Synchronisation relativ zu den Funkrahmen und basierend auf dem absoluten Zeitstempel ermöglichen. Beispielsweise kann das Kontrollmodul in der Vorrichtung für den mobilen Sendeempfänger ausgebildet sein, um den Zähler basierend auf dem absoluten Zeitstempel anzupassen. In manchen Ausführungsbeispielen kann der absolute Zeitstempel in der Vergangenheit liegen. In anderen Ausführungsbeispielen kann der absolute Zeitstempel in der Zukunft liegen.

In manchen Ausführungsbeispielen kann das Kontrollmodul der Vorrichtung für den mobilen Sendeempfänger ausgebildet sein, um bezüglich der Synchronisierung mit den sich wiederholenden Funkrahmen eine Information über eine Signallaufzeit zwischen dem Basisstations-Sendeempfänger und dem mobilen Sendeempfänger zu bestimmen. Das Kontrollmodul kann ferner ausgebildet sein, um die Information über die Signallaufzeit bei der Bestimmung der Zeitbasis zu berücksichtigen. Ausführungsbeispiele können so durch Signallaufzeiten bedingte Ungenauigkeiten reduzieren oder sogar eliminieren. Das Kontrollmodul der Vorrichtung für den mobilen Sendeempfänger kann ferner ausgebildet sein, um basierend auf der Zeitbasis Signalwerte abzutasten oder wiederzugeben und so synchron zur Zeitbasis des Basisstations-Sendeempfängers und damit auch synchron zu anderen mobiler Sendeempfängern Messwerte erfassen. Die Signalwerte können beispielsweise Audio- oder Videosignale umfassen.

In Ausführungsbeispielen kann die Information über die lokale Zeitreferenz einen Zeitstempel gemäß dem Precision Time Protocol (PTP, präzises Zeitprotokoll) sein.

Ausführungsbeispiele schaffen auch ein System zum zeitsynchronen Abtasten oder Wiedergeben von Signalen mittels zwei oder mehr mobilen Sendeempfängern eines Mobilkommunikationssystems. Das System umfasst zwei oder mehr mobile Sendeempfänger mit je einer Vorrichtung gemäß obiger Beschreibung und zumindest einen Basisstations-Sendeempfänger mit einer Vorrichtung gemäß obiger Beschreibung.

Ausführungsbeispiele schaffen ein Verfahren zur Ermittlung einer Zeitbasis in einem mobilen Sendeempfänger in einem Mobilkommunikationssystem. Das Mobilkommunikationssystem weist zumindest einen Basisstations-Sendeempfänger auf. Das Verfahren umfasst ein Kommunizieren mit dem zumindest einen Basisstations-Sendeempfänger des Mobilkommunikationssystems und ein Austauschen von Information in sich wiederholenden Funkrahmen mit dem Basisstations-Sendeempfänger. Das Verfahren umfasst ferner ein Herstellen einer Synchronisation mit den sich wiederholenden Funkrahmen, ein inkrementelles Erhöhen eines Zählers und ein Erhalten einer Nachricht von dem zumindest einen Basisstations-Sendeempfänger. Die Nachricht umfasst Information über eine lokale Zeitreferenz an dem Basisstations-Sendeempfänger. Das Verfahren umfasst darüber hinaus ein Ermitteln der Zeitbasis durch Anpassen des Zählers basierend auf der Information über die lokale Zeitreferenz.

Ausführungsbeispiele schaffen ein Verfahren zur Übertragung einer Zeitbasis von einem Basisstations-Sendeempfänger an einen mobilen Sendeempfänger in einem Mobilkommunikationssystem. Das Verfahren umfasst Kommunizieren mit dem zumindest einen mobilen Sendeempfänger, Austauschen von Information in sich wiederholenden Funkrahmen mit dem mobilen Sendeempfänger und Bereitstellen der Zeitbasis durch Senden einer Nachricht von dem zumindest einen Basisstations-Sendeempfänger an den mobilen Sendeempfänger. Die Nachricht umfasst Information über eine lokale Zeitreferenz relativ zu den sich wiederholenden Funkrahmen.

Ausführungsbeispiele schaffen ferner ein Programm/Computerprogramm mit einem Programmcode zum Durchführen zumindest eines der oben beschriebenen Verfahren, wenn der Programmcode auf einem Computer, einem Prozessor, einem Controller oder einer programmierbaren Hardwarekomponente ausgeführt wird. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

## Figurenkurzbeschreibung

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:

Fig. 1 Blockdiagramme für ein Ausführungsbeispiel einer Vorrichtung für einen mobilen Sendeempfänger, ein Ausführungsbeispiel einer Vorrichtung für einen Basisstations-Sendeempfänger und ein Ausführungsbeispiel eines Systems;

Fig. 2 eine Nachrichtensequenz aus einem Ausführungsbeispiel;

Fig. 3 ein Blockschaltbild eines Ablaufdiagramms eines Ausführungsbeispiels eines Verfahrens für einen mobilen Sendeempfänger; und

Fig. 4 ein Blockschaltbild eines Ablaufdiagramms eines Ausführungsbeispiels eines Verfahrens für einen Basisstations-Sendeempfänger.

## Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden", "gekoppelt" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

In manchen Ausführungsbeispielen kann eine Zeitsynchronisierung der Systeme oder Komponenten mittels PTP (Precision Time Protocol, IEEE1588) im Zusammenspiel mit der Zeitbasis erreicht werden. PTP wird beispielsweise auch bei gebräuchlichen Standards wie AES67/Ravenna, Dante benutzt.

PTP kann generell Zusatzhardware im Netzwerkchip aufweisen und kann damit Genauigkeiten im Bereich weniger 10ns erreichen. Die theoretische Auflösung ist 1ns bei einem Zeitstempelformat von 64Bit. Mittels PTP ist damit direkt eine absolute (numerische) Zeitbasis in jedem Gerät verfügbar, aus der über (D)PLLs (Digital Phase Locked Loop, digitale Phasenregelschleife) auch ein elektrisch synchroner Sampletakt generiert werden kann. AES67 selbst kann die Sampledaten gemäß dem RTP-Standard (von engl. Real Time Protocol, Echtzeitprotokoll, Standard RFC3550 (Request for Comments 3550)) übertragen. Die Datenpakete beinhalten eine fortlaufende Sequenznummer, aber keinen Zeitstempel. In regelmäßigen Abständen wird über einen Kontrollkanal (RTCP, Real Time Control Protocol, Echtzeitkontrollprotokoll) mittels eines Sender-Reports (SR, Sender-Berichte) ein Paket mit einer vergangenen Paketsequenznummer und einem Zeitstempel des ersten Samples darin übermittelt. Darüber lässt sich dann jedes Sample wieder auf die Zeitbasis referenzieren.

Die für Ausführungsbeispiele hauptsächlich beschriebenen Audio-Anforderungen lassen sich auch auf andere Anwendungen übertragen, z.B. Sampleausgabe, industrielle Messwerterfassung, Video etc. Durch die Asynchronität der Netzwerkübertragung ist Wissen um eine globale Zeit (für die beteiligten Geräte gleich/gemeinsam) nötig, diese kann zum Einlesen und/oder zur synchronen Ausgabe benötigt werden. Im Folgenden werden Ausführungsbeispiele im LTE (Long Term Evolution) und der Nachfolgestandard 5G (5th Generation) als verwandt angenommen, d.h. bekannte Eigenschaften von LTE sind mit hoher Wahrscheinlichkeit ähnlich in 5G enthalten.

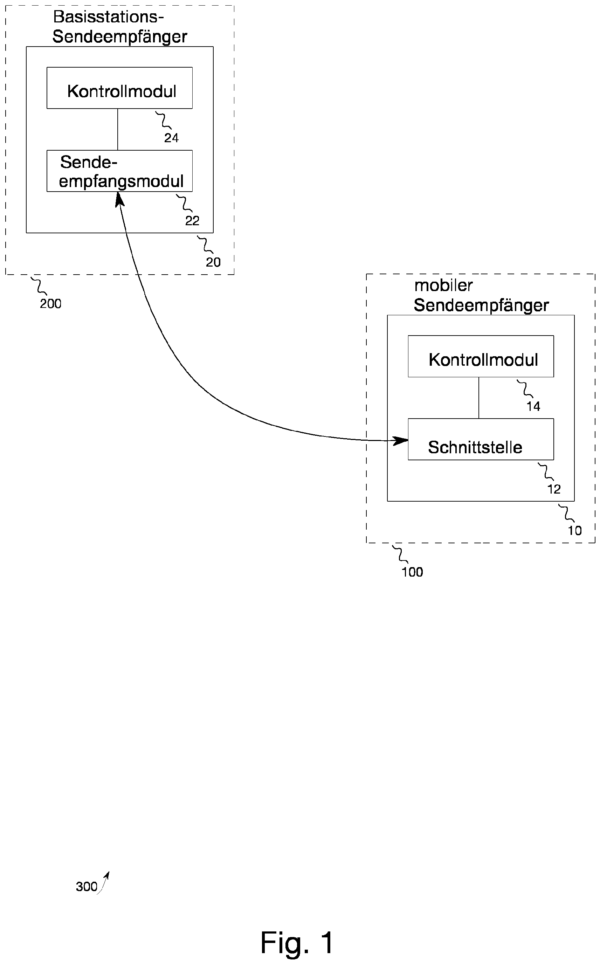

Fig. 1 zeigt Blockdiagramme für ein Ausführungsbeispiel einer Vorrichtung 10 für einen mobilen Sendeempfänger 100, ein Ausführungsbeispiel einer Vorrichtung 20 für einen Basisstations-Sendeempfänger 200 und ein Ausführungsbeispiel für ein System 300.

Die Vorrichtung 10 ist zur Ermittlung einer Zeitbasis in einem mobilen Sendeempfänger 100 in einem Mobilkommunikationssystem 300 angepasst. Das Mobilkommunikationssystem 300 weist zumindest einen Basisstations-Sendeempfänger 200 auf und der mobile Sendeempfänger 100 ist ausgebildet, um Information in sich wiederholenden Funkrahmen mit dem Basisstations-Sendeempfänger 200 auszutauschen (angedeutet durch den beidseitigen Pfeil). Die Vorrichtung 10 umfasst zumindest eine Schnittstelle 12, die ausgebildet ist, um mit dem zumindest einen Basisstations-Sendeempfänger 200 des Mobilkommunikationssystems 300 zu kommunizieren. Die Vorrichtung 10 umfasst ferner ein Kontrollmodul 14, das ausgebildet ist, um die zumindest eine Schnittstelle 12 zu kontrollieren und um eine Synchronisation mit den sich wiederholenden Funkrahmen herzustellen. Das Kontrollmodul 14 ist ferner ausgebildet, um einen Zähler inkrementell zu erhöhen und eine Nachricht von dem zumindest einen Basisstations-Sendeempfänger 200 zu erhalten. Die Nachricht umfasst Information über eine lokale Zeitreferenz an dem Basisstations-Sendeempfänger 200. Das Kontrollmodul 14 ist ferner ausgebildet, um den Zähler basierend auf der Information über die lokale Zeitreferenz anzupassen und so die Zeitbasis zu ermitteln. Das Kontrollmodul 14 ist mit der zumindest einen Schnittstelle 12 gekoppelt. Ausführungsbeispiele schaffen auch einen mobilen Sendeempfänger 100 mit einem Ausführungsbeispiel der Vorrichtung 10.

Die Vorrichtung 20 ist zur Übertragung einer Zeitbasis von dem Basisstations-Sendeempfänger 200 an den mobilen Sendeempfänger 100 in dem Mobilkommunikationssystem 300 angepasst. Die Vorrichtung 20 umfasst zumindest ein Sendeempfangsmodul 22, das ausgebildet ist, um mit dem zumindest einen mobilen Sendeempfänger 100 zu kommunizieren. Die Vorrichtung 20 umfasst ein Kontrollmodul 24, das ausgebildet ist, um das Sendeempfangsmodul 22 zu kontrollieren und um über das Sendeempfangsmodul 22 Information in sich wiederholenden Funkrahmen mit dem mobilen Sendeempfänger 100) auszutauschen. Das Kontrollmodul 24 ist ferner ausgebildet, um eine Nachricht von dem zumindest einen Basisstations-Sendeempfänger 200 an den mobilen Sendeempfänger 100 zu senden und so die Zeitbasis bereitzustellen. Die Nachricht umfasst dabei Information über eine lokale Zeitreferenz relativ zu den sich wiederholenden Funkrahmen. Das Kontrollmodul 24 ist mit dem Sendeempfangsmodul 22 gekoppelt. Ausführungsbeispiele schaffen auch einen Basisstations-Sendeempfänger 200 mit einem Ausführungsbeispiel der Vorrichtung 20. Die Lokale Zeitreferenz kann dabei beispielsweise auf 1ns, 5ns, 10ns, 50ns, 100ns, etc. genau sein. Ausführungsbeispiele erlauben auch eine Kommunikation zwischen zwei Basisstations-Sendeempfängern, sodass auch mehrere Basisstations-Sendeempfänger untereinander synchronisiert werden können. Sind erst mehrere Basisstations-Sendeempfänger untereinander synchron, können entsprechend auch mehrere mobile Sendeempfänger synchronisiert werden, selbst wenn diese unterschiedlichen Basisstations-Sendeempfängern zugeordnet sind.

Darüber hinaus schaffen Ausführungsbeispiele ein System 300 zum zeitsynchronen Abtasten oder Wiedergeben von Signalen mittels zwei oder mehr mobilen Sendeempfängern 100. Das System 300 umfasst die zwei oder mehr mobilen Sendeempfänger 100 mit je einer Vorrichtung 10 und zumindest einen Basisstations-Sendeempfänger 200 mit einer Vorrichtung 20.

In Ausführungsbeispielen kann die Schnittstelle 12 als beliebige schnurgebundene oder in manchen Ausführungsbeispielen schnurlose Schnittstelle 12 ausgebildet sein, die den Austausch von Daten erlauben. Es können dabei analoge und digitale Implementierungen vorkommen und die Schnittstelle 12 kann als ein oder mehrere Kontakte, Register, Leiter, usw. implementiert sein. In manchen Ausführungsbeispielen kann die Schnittstelle 12 auch eine Schnittstelle zu einem Sendeempfangsmodul sein, dass zur Schnurloskommunikation mit dem Basisstations-Sendeempfänger 200 ausgebildet ist. Prinzipiell kann die Vorrichtung 10 auch zur schnurgebundenen Kommunikation implementiert sein und die Schnittstelle 12 zur Kommunikation mit anderen Komponenten in einem mobilen Sendeempfänger dienen, beispielsweise mit einem Funkmodem (Sendempfangsmodul).

Das Sendeempfangsmodul 22, und auch ein etwaiges Sendeempfangsmodul auf der Seite des mobilen Sendeempfängers 100, kann dabei typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, Funkmodem usw. fallen. In Ausführungsbeispielen können die Kontrollmodule 14, 24 einem beliebigen Controller oder Prozessor oder einer programmierbaren Hardwarekomponente entsprechen. Beispielsweise können die Kontrollmodule 14, 24 auch als Software oder Computerprogramm realisiert sein, die oder das für eine entsprechende Hardwarekomponente programmiert ist. Insofern kann ein Kontrollmodul 14, 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der Kontrollmodule 14, 24 denkbar.

In Ausführungsbeispielen kann das System, Mobilfunksystem oder Mobilkommunikationssystem 300 beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), Systeme der fünften Generation (5G) oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

Im Folgenden wird angenommen, dass ein solches Mobilfunksystem zumindest einen stationären Sendeempfänger im Sinne einer Basisstation oder Basisstations-Sendeempfänger 200 umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger 100 (Mobilfunkendgerät, Funkmodem) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem Kfz), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Ein Basisstations-Sendeempfänger oder eine Basisstation (diese Begriffe können äquivalent verwendet werden) kann ausgebildet ausgelegt sein, um mit einem oder mehreren aktiven Mobilfunkgeräten zu kommunizieren und um in oder benachbart zu einem Versorgungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico-, Metro- oder Femto-Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Kraftfahrzeug (Kfz), einem Auto, Lastkraftwagen (Lkw), Motoräder, Fahrräder, Züge, Flugzeuge, Schiffe , sämtliche Luft-, Land-, und Wasserfortbewegungsmittel etc., entsprechen. Ein mobiler Sendeempfänger kann auch als engl. "User Equipment (UE)" oder Mobile im Einklang mit der 3GPP-Terminologie bezeichnet werden.

Ein Basisstations-Sendeempfänger oder eine Basisstation kann sich zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobilen Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder ein Basisstations-Sendeempfänger einer NodeB, einer eNodeB, einer Base Transceiver Station (BTS), einem Zugangspunkt, einem Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, einer Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Zum Beispiel, können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden.

Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Closed Subscriber Group CSG") und offene Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann der Abdeckungsbereich einer kleinen Zelle zumindest teilweise von einem Versorgungsbereich einer anderen Zelle umgeben sein oder teilweise mit dem Versorgungsbereich z.B. einer Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, z.B. entlang von Autobahnen auch 10km oder mehr, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen Kfz- oder einen Gate-Bereich auf dem Flughafen abzudecken, d.h. ihr Sendegebiet kann einen Durchmesser von unter 50m aufweisen.

Ausführungsbeispiele können eine (Audio-) Synchronisierung über LTE/5G-Funknetzwerke ohne große Eingriffe in den Standard bzw. die Empfangs-Hardware erlauben. Dazu wird eine möglichst genaue Referenzzeit (lokale Referenzzeit beim Basisstations-Sendeempfänger 200) an das Endgerät (Terminal, mobiler Sendeempfänger 100) übermittelt. Dieser Zeitwert ist im Terminal hardwaretechnisch so verfügbar/verarbeitbar, dass obige Forderungen einfach erfüllt werden können. Ausführungsbeispiele können dabei "minimalinvasiv" sein, d.h. keine oder nur geringe Eingriffe in bestehende Empfangs-Hardware erfordern. Ausführungsbeispiele können so unter Umständen keine oder nur geringe Zusatzkosten bei der Hardwareimplementierung verursachen. Ausführungsbeispiele können von universellen Schnittstellen, beispielsweise zur Software oder zur Audio-Hardware, Gebrauch machen.

In einigen weiteren Ausführungsbeispielen ist das Kontrollmodul 14 ausgebildet, um als Information über die lokale Zeitreferenz einen absoluten Zeitstempel und eine Identifikationsinformation über einen zu dem absoluten Zeitstempel in zeitlicher Relation stehenden Funkrahmen zu erhalten. Die Funkrahmen können in Ausführungsbeispielen einem zeitlichen Raster entsprechen, in die eine Kommunikation über die Luftschnittstelle eingeteilt ist. Dabei können beispielsweise Zeitschlitze (slots), Rahmen (frames), Unterrahmen (sub-frames), Hyperahmen (hyper frames), Systemrahmen (system frames), usw. unterschieden werden.

LTE, beispielsweise, definiert einen sog. System Information Block SIB#16 (Systeminformationsblock). Dieser überträgt die Zeit als UTC (Universal Time Coordinated, koordinierte Weltzeit) mit Sekundenauflösung. SIBs werden asynchron übertragen, d.h. selbst wenn SIB 16 unmittelbar nach einem Sekundensprung gesendet wird, ist unklar, welche Zeitverzögerung im Übertragungsweg und auch auf der Empfängerseite liegt. Mehr als "informativ" kann der Wert also nicht sein. PTP/NTP (Network Time Protocol, Netzwerkzeitprotokoll) sind durch die relativ großen Latenzen und unvorhersagbares Timing in einem Mobilfunkszenario nur bedingt sinnvoll nutzbar.

Basisstationen können bereits zu einem großen Teil untereinander mittels PTP synchronisiert sein, d.h. dort ist eine präzise Zeit bereits vorhanden. Aber auch ohne PTP wird eine sehr stabile Zeitbasis (via GPS bzw. Frequenznormale) für die Generierung der Sendefrequenz bzw. das Sendetiming benutzt. Beispielsweise LTE arbeitet mit Slots von 10ms. Zu Beginn jedes Slots wird eine fortlaufende System Frame Number (SFN, Systemrahmennummer) übertragen. Bei LTE sind Werte 0...1023 möglich, d.h. nach ca. 10s wiederholen sich die SFNs. Jedes Terminal kann auf Grundlage eines internen Taktes arbeiten, z.B. aus einem Quarzoszillator. Die interne Signalverarbeitung (Empfangsfrequenz und HochFrequenz (HF)-Sampletakt) ist mit diesem Takt über PLLs (von Phase Locked Loop) unmittelbar über einen festen Faktor gekoppelt.

Während der Synchronisierung auf das OFDM-Signal von LTE fallen Korrekturwerte für die lokale Empfangsfrequenz bzw. das Timing an. Diese sind (zumindest bei Stillstand) ein relativ genaues Maß für Abweichung des lokalen Taktes vom Referenztakt der Basisstation. D.h. über diese Korrekturwerte lässt sich mit (D)PLLs die Referenzfrequenz der Basisstation elektrisch wieder nachbilden. Eine Phasenbeziehung bzw. ein numerischer Absolutwert ist damit direkt noch nicht erreichbar. Ausführungsbeispiele können daher einen Echtzeitzähler oder Echtzeitkontroller verwenden, RTC (Real Time Controller = Lokales Register/Zähler der globalen PTP-Zeit, z.B. in 1ns, 5ns, 10ns, 50ns, 100ns, usw. Auflösung). Das Kontrollmodul 14 kann ausgebildet sein, um bezüglich der Synchronisierung mit den sich wiederholenden Funkrahmen eine Information über eine Signallaufzeit zwischen dem Basisstations-Sendeempfänger 200 und dem mobilen Sendeempfänger 100 zu bestimmen. Das Kontrollmodul 14 kann ferner ausgebildet sein, um die Information über die Signallaufzeit bei der Bestimmung der Zeitbasis zu berücksichtigen.

Im Folgenden werden Ausführungsbeispiele von Algorithmen schrittweise erklärt:

0)
Der RTC entspricht dem Zähler, der inkrementell erhöht wird. In einem Ausführungsbeispiel wird die RTC mit einem lokalen Takt erhöht. Der Inkrementwert ist beispielsweise ohne Korrekturen 1/(lokaler Takt*RTC-Auflösung). Zusätzlich kann der aus der Synchronisierung bekannte Korrekturfaktor über Dithering bzw. erhöhte RTC-Zählergenauigkeit miteinbezogen werden.

1)
Ist die LTE-Synchronisierung auf den Slotanfang erfolgt, ist in Ausführungsbeispielen durch deterministische DSP-Algorithmen bestimmbar, zu welchem (lokalen) Zeitpunkt dieser Slot tatsächlich angefangen hat. Dieser lokale Zeitpunkt kann z.B. auf "Samples seit Einschalten" etc. basieren.

2)
Nach erfolgter Synchronisierung und Dekodierung des Slot-Headers (Kontrollinformation) ist auch die SFN des Slots bekannt.

3) Somit ist dann auch die lokale Zeit des Beginns eines bestimmten SFN-Slots bestimmbar (aus 1 +2). Das Kontrollmodul 14 kann dann ausgebildet sein, um den Zähler basierend auf dem absoluten Zeitstempel anzupassen bzw. zunächst abzuspeichern. Das Kontrollmodul 14 kann ausgebildet sein, um die jeweils aus 1) bestimmbare lokale Zeit für eine oder mehrere bestimmte (z.B. zukünftige, vgl. 4b) bzw. einen oder mehrere beliebige (z.B. bereits vergangene, vgl. 4a) SFN-Slots zu speichern und sie später als Zuordnung der SFN zu einen lokalen Zeit verfügbar zu machen.

4a)
In einigen weiteren Ausführungsbeispielen kann nun über den LTE-Datenkanal (als SIB oder IP-Paket) von dem Basisstations-Sendeempfänger aus eine asynchrone Meldung verschickt werden, die zu einer oder mehreren SFN der Vergangenheit deren exakte PTP-Zeitstempel enthält. Der absolute Zeitstempel liegt dann in der Vergangenheit.

4b)

In manchen Ausführungsbeispielen kann über den LTE-Datenkanal von dem Basisstations-Sendeempfänger aus eine asynchrone Meldung verschickt werden, die zu einer oder mehrerer SFN der Zukunft deren (vermutlich) exakten PTP-Zeitstempel enthält. Da das LTE-Timing absolut deterministisch ist, ist "(vermutlich)" keine relevante Einschränkung der Genauigkeit. Der absolute Zeitstempel liegt dann in der Zukunft.

Implementierungstechnisch können Ausführungsbeispiele der ersten Variante (4a, Zeitstempel der Vergangenheit) einfacher und evtl. auch präziser sein. Beispielsweise kann die Slotstart-Erkennung in dem Basisstations-Sendeempfänger z.B. elektrisch nur über einen Pulsausgang die PTP-Zeit registrieren. Die SFN-Nummer kann dann über Software später dazu geliefert werden.

5a)
Enthält die Meldung 4a) (Nachricht vom Basisstations-Sendeempfänger) eine SFN, deren Zeit man in 3) bestimmt hat, ist dessen globale Zeit bekannt (zzgl. evtl. Laufzeit/Processingkorrekturen). Mit der seitdem vergangenen lokalen Zeit und dem über die Synchronisierung bekannten Korrekturfaktor lokal/global ist damit auch die aktuelle PTP-Zeit bestimmbar. Dieser Wert kann dann in das RTC-Register geschrieben werden.

5b)
Die Meldung 4b) kann in eine Vergleichseinheit geschrieben werden. Trifft eine passende SFN ein, kann die vorher übertragene globale Zeit (+ evtl. Korrektur wg. Laufzeit und Processingdelay (Verarbeitungsverzögerungen)) direkt im RTC-Register gesetzt werden.

5c)
Solange man in einem gültigen/aktuellen SFN-Bereich bleibt, ist durch das deterministische LTE-Timing auch indirekt aus einem mit 4) konkret übertragenen SFN/Zeitstempel-Paar jeder andere empfangene SFN in eine PTP-Zeit umrechenbar.

In Ausführungsbeispielen kann die Information über die lokale Zeitreferenz ein Zeitstempel gemäß dem Precision Time Protocol sein, sowohl auf der Seite des Basisstations-Sendeempfängers als auch auf der Seite des mobilen Sendeempfängers. Das Kontrollmodul 14 kann dann ferner ausgebildet sein, um basierend auf der Zeitbasis Signalwerte abzutasten oder wiederzugeben. Beispielsweise können die Signalwerte Audio- oder Videosignale umfassen.

In einigen weiteren Ausführungsbeispielen können, um Sprünge im RTC zu vermeiden, nach der ersten Initialisierung alle weiteren Updates "sanft" über Änderungen des Inkrementfaktors anhand der RTC-Differenz erfolgen (PID-Regler ähnlich PTP/NTP-Updatemechanismen). Die Entfernung zwischen mobilem Sendeempfänger 100 und Basisstations-Sendeempfänger 200 erzeugt zusätzliche Laufzeit (Timing Advance=TA). LTE kann diese in 520ns-Schritten bestimmen, da sie auch für das Senden benötigt wird. Der TA-Wert (oder genauere Distanzbestimmungen) wird zumindest in manchen Ausführungsbeispielen vom empfangenen PTP-Wert abgezogen. Ein bewegter Empfänger kann durch den Dopplereffekt andere Korrekturwerte bei der OFDM-Synchronisation bestimmen, die in einigen Ausführungsbeispielen ebenfalls berücksichtigt werden. Es gibt Methoden zur Bestimmung der Geschwindigkeit aus den Kanaldaten (Crossing Rate, Correlation), die in Ausführungsbeispiele eingesetzt werden können. Daher kann in manchen Ausführungsbeispielen der Korrekturfaktor entweder bei längerem Stillstand bestimmt werden oder über die Algorithmen zur Geschwindigkeitsbestimmung angepasst werden.

In einigen weiteren Ausführungsbeispielen wird der RTC-Wert zur Audiosynchronisation verwendet. Ein für alle Geräte (mobile Sendeempfänger) synchroner Sampletakt kann aus "RTC modulo (Sampletakt in RTC-Steps)" gewonnen werden. Ein Jitterfilter (PLL etc.) kann ebenfalls eingesetzt werden. Das Auslesen des RTC um den Zeitpunkt für ein bestimmtes Sample zu bestimmen, kann durch den Einsatz von dafür vorgesehener Hardware gegenüber einer Softwarelösung präziser gemacht werden. Hardwareunterstützung kann beispielsweise analog über sog. Timer Capture Units (Zähler Erfassungseinheiten) realisiert werden, die typischerweise in Embedded CPUs (von engl. Central Processing Units, zentrale Recheneinheit) vorhanden sind.

In manchen Ausführungsbeispielen speichert eine solche Capture Unit den aktuellen RTC Wert, wenn ein bestimmtes Ereignis (Trigger, z.B. steigende Flanke) auftritt. Dieser Trigger kann z.B. das Samplen (Abtasten) des ersten Wertes eines größeren Blocks der Audioeinheit sein. Damit kann dieses Ereignis entweder von außen über einen Pin zugeliefert werden (Audioeinheit ebenfalls extern) oder intern aus der Audioeinheit über eine einfache Logik bezogen werden. Der Wert des Capture Registers wird später in Software ausgelesen, z.B. wenn die Audioeinheit den Block gefüllt hat. Mit der Nummer des aktuell gelesenen Blocks verknüpft können dann in Ausführungsbeispielen die RTCP Sender Reports erstellt werden. Zur synchronen Ausgabe von Samples kann der RTC mit einem aus der Software vorher bestimmten Wert in Hardware verglichen werden. Erreicht/überschreitet RTC den Wert, kann die Sampleausgabe in dem mit dem vorher gezeigten erzeugten Sampletakt starten.

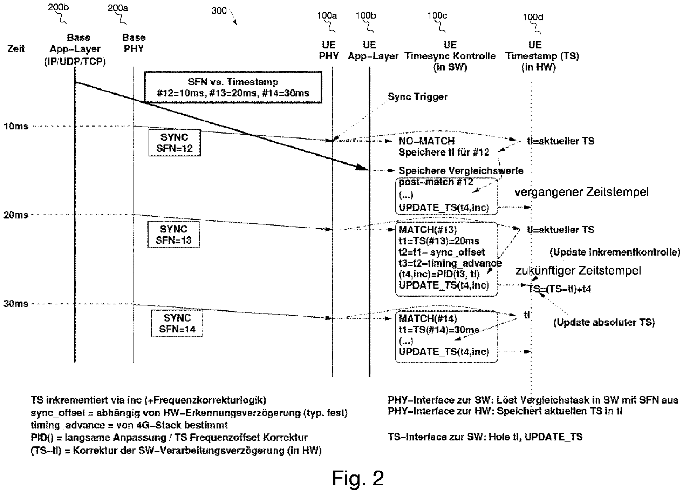

Fig. 2 zeigt eine Nachrichtensequenz und ein Verfahren aus einem Ausführungsbeispiel. Die Fig. 2 zeigt einen zeitlichen Ablauf nach Funkrahmen in einem LTE-System 300. Ein Funkrahmen dauert 10ms und in der gewählten Darstellung schreitet die Zeit von oben nach unten fort. Die Fig. 2 zeigt drei aufeinanderfolgende Funkrahmen, SFN= 12, 13, 14, deren Grenzen aus Sicht des Basisstations-Sendeempfängers bei den absoluten Zeiten 10ms, 20ms und 30ms liegen. Auf der linken Seite ist ein Basisstations-Sendeempfänger 200 mit einer physikalischen Protokollschicht "Base Phy" 200a und einer Applikationsschicht "Base App-layer" 200b dargestellt. Protokolle der Applikationsschicht 200b im Basisstations-Sendeempfänger können beispielsweise IP, UDP (Universal Datagramm Protocol) oder TCP (Transport Control Protocol) sein. Auf der rechten Seite der Fig. 2 sind die physikalische Protokollschicht "UE-Phy" 100a und die Applikationsschicht "UE App-layer" 100b eines mobilen Sendeempfängers 100 dargestellt. Darüber hinaus zeigt die Fig. 2 die Kontrolle der Zeitbasis des mobilen Sendeempfängers 100 mit einem Softwaremodul "UE Timesync Kontrolle" 100c und einem Hardwaremodul "UE Timestamp (TS)" 100d.

Der Zeitstempel TS beinhaltet die lokale (zu synchronisierende) Zeit und wird über den Wert "inc", der von einer Frequenzkorrekturlogik abhängt, kontinuierlich inkrementiert. Der "sync_offset" hängt von der durch die Hardware hervorgerufenen Erkennungsverzögerung ab und ist typischerweise konstant. Der "timing_advance" wird im Rahmen der 4G/LTE-Protokolle berechnet. Die Funktion PID() führt den Wert TS sanft oder langsam nach und kann eine Frequenzversatz- oder Frequenzoffsetkorrektur durchführen, beispielsweise basierend auf den Grundsätzen eines PID-Reglers (Proportional, Integrativ, Differentiell). t1 ist mindestens ein in diesem Ausführungsbeispiel in Hardware implementiertes Register auf der Seite der Mobilen, das auf den Zähler auf der Seite des Basisstations-Sendeempfängers synchronisiert werden soll und das den aktuellen Wert des TS-Registers beim Eintreffen eines Slot-Synchronisationspulses ohne wesentliche Verzögerung zwischenspeichert. Der Wert (TS-*tl*) entspricht der Korrektur der Verzögerung durch die Verarbeitung der Software. Die Schnittstelle zwischen PHY-interface 100a und der Software löst dabei einen Vergleichs- oder Anpassungsmechanismus mit der SFN für den Zählerwert TS aus. Die Schnittstelle zwischen PHY-interface 100a und der Hardware speichert den aktuellen TS-Wert in *tl*. Die Schnittstelle zwischen Software und dem TS-Wert erlaubt ein Auslesen und Aktualisieren des TS-Wertes.

Wie die Fig. 2 zeigt, sendet der Basisstations-Sendeempfänger kurz vor 10ms und Beginn SFN 12 die Nachricht mit dem Zeitstempel, die dann auf Seiten des mobilen Sendeempfängers 100 gespeichert wird. Eine Synchronisation auf Funkrahmenebene wird dabei bei Eintreffen der SFN-Grenze beim mobilen Sendeempfänger ausgelöst ("Sync Trigger" in Fig. 2). Dabei wird der Zählerwert TS in *tl* abgelegt. Nach Eintreffen der Nachricht von dem Basisstations-Sendeempfänger 200 kann festgestellt werden, welcher Zeitstempel (Zählerwert) auf der Basisstations-Sendeempfängerseite zum Funkrahmenbeginn SFN 12 gehört. Der Zählerwert kann dann beim mobilen Sendeempfänger 100 im Nachhinein angepasst werden ("post-match #12, (...), UPDATE_TS(t4, inc)). In dieser Variante bezieht sich der Zeitstempel auf die Vergangenheit, sodass aus der Differenz zwischen Zähler und Zeitstempel in der Vergangenheit auf die entsprechende Korrektur geschlossen werden kann. Zum Übergang zu SFN 13 kann der Zählerwert wieder aktualisiert werden wobei dann die Hardwareverarbeitungsverzögerung "sync_offset" und der "timing_advance" berücksichtigt werden können, dies funktioniert entsprechend, wenn der Zeitstempel in der Zukunft liegt:

```
"MATCH(#13),
t1=TS(#13)=20ms,
t2=t1-sync_offset,
t3=t2-timing_advance,
(t4,inc)=PID(t3, tl),
UPDATE_TS(t4,inc))."
```

Es ergibt sich dann der neue Zählerwert als

$$TS=(TS-tl)+t4.$$

Damit können die Höhe des Inkrements und der absolute Zeitwert kontrolliert werden. Im nachfolgenden SFN 14 kann dann analog verfahren werden. In Falle von zukünftigen Zeitstempeln kann entsprechend schon im Voraus mit dem Einregeln begonnen werden. Fig. 2 illustriert den Ablauf einer Synchronisation zwischen Basisstations-Sendeempfänger 200 und mobilem Sendeempfänger 100. Dabei sind zwei Fälle der Synchronisation angedeutet (Zeitstempel für vergangene als auch für zukünftige SFNs). Damit ist auch gezeigt, dass die Verwaltungsnachrichten asynchron auf IP-Ebene laufen können und kein genaues Timing brauchen. Darüber hinaus können Ausführungsbeispiele auch eine Synchronisation mit vergangenen und zukünftigen Zeitstempeln erlauben. Dies kann insbesondere in Szenarien mit variierenden Verzögerungen nützlich sein.

Ebenso ist skizziert, welche Teile in diesem Ausführungsbeispiel in Hardware implementiert sind und welche in Software. Der PID-Teil ist ein Regelalgorithmus, der die Abweichung der eigenen Uhr für die Korrektur und den gesamten Zeitfortschritt mit einbezieht, um einen systematischen Fehler des lokalen Quarzes zu finden und zu korrigieren (evtl. auch mit Hilfe der Ergebnisse aus der OFDM-Synchronisation). Damit kann auch ein kontinuierliches Update sanft ohne größere bzw. nicht-monotone Zeitsprünge durchgeführt werden.

Ausführungsbeispiele können eine "sparsame" Schnittstelle 12 zwischen dem eigentlichen Modem (Sendeempfangsmodul) und der Synchronisationseinheit 10 ermöglichen. In manchen Ausführungsbeispielen wird nur ein Trigger-Puls für den Sync-Zeitpunkt ("Sync Trigger") und eine (später z.B. in Software) auslesbare SFN dieses Sync-Frames verwendet. Damit kann die Zeitsynchronisation auch außerhalb der Modem-Hardware als extra Chip realisiert sein.

In einigen weiteren Ausführungsbeispielen kann bei der Übergabe der Zeit zu einer Audio/Sample-Hardware oder Messhardware allgemein, das Triggersignal von der Audio/Sample-Hardware verwendet werden, um aktuellen TS-Wert zu speichern. Dieser kann dann später asynchron ausgelesen werden. Die Audio/Sample-Hardware kann dann aus dem aktuellen TS und der "internen" Zeit zum Auslösen des Triggerpulses ebenfalls die echte Zeit rekonstruieren. Dies kann ggf. einfacher als im LTE-Fall gehen, da alles lokal mit deterministischem Timing läuft. D.h. zumindest in manchen Ausführungsbeispielen kann auf Offset-Korrekturen oder PID-Regler verzichtet werden.

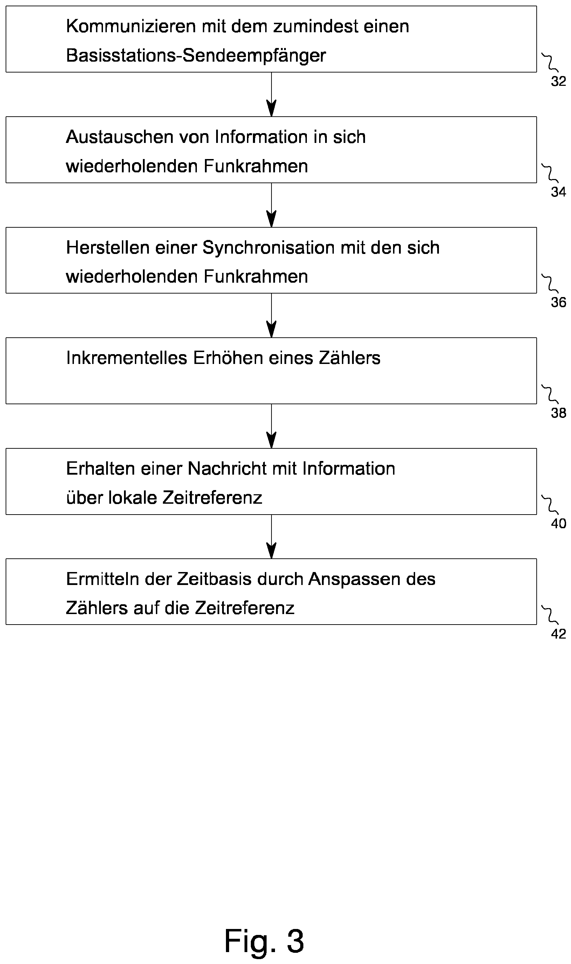

Fig. 3 zeigt ein Blockschaltbild eines Ablaufdiagramms eines Ausführungsbeispiels eines Verfahrens für einen mobilen Sendeempfänger 100. Das Verfahren ist zur Ermittlung einer Zeitbasis in einem mobilen Sendeempfänger 100 in einem Mobilkommunikationssystem 300 angepasst. Das Mobilkommunikationssystem 300 weist zumindest einen Basisstations-Sendeempfänger 200 auf. Das Verfahren umfasst ein Kommunizieren 32 mit dem zumindest einen Basisstations-Sendeempfänger 200 des Mobilkommunikationssystems 300 und ein Austauschen 34 von Information in sich wiederholenden Funkrahmen mit dem Basisstations-Sendeempfänger 200. Das Verfahren umfasst ferner ein Herstellen 36 einer Synchronisation mit den sich wiederholenden Funkrahmen und ein inkrementelles Erhöhen 38 eines Zählers. Das Verfahren umfasst ferner ein Erhalten 40 einer Nachricht von dem zumindest einen Basisstations-Sendeempfänger 200. Die Nachricht umfasst Information über eine lokale Zeitreferenz an dem Basisstations-Sendeempfänger 200. Das Verfahren umfasst darüber hinaus ein Ermitteln 42 der Zeitbasis durch Anpassen des Zählers basierend auf der Information über die lokale Zeitreferenz.

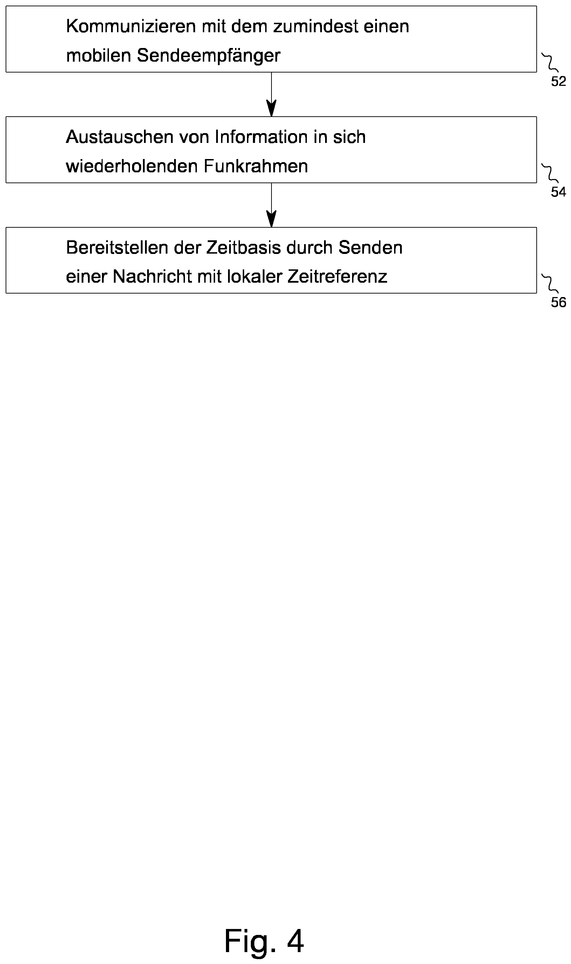

Fig. 4 illustriert ein Blockschaltbild eines Ablaufdiagramms eines Ausführungsbeispiels eines Verfahrens für einen Basisstations-Sendeempfänger 200. Das Verfahren zur Übertragung einer Zeitbasis von einem Basisstations-Sendeempfänger 200 an einen mobilen Sendeempfänger 100 in einem Mobilkommunikationssystem 300 umfasst Kommunizieren 52 mit dem zumindest einen mobilen Sendeempfänger 100 und Austauschen 54 von Information in sich wiederholenden Funkrahmen mit dem mobilen Sendeempfänger 100. Das Verfahren umfasst ein Bereitstellen 56 der Zeitbasis durch Senden einer Nachricht von dem zumindest einen Basisstations-Sendeempfänger 200 an den mobilen Sendeempfänger 100. Die Nachricht umfasst Information über eine lokale Zeitreferenz relativ zu den sich wiederholenden Funkrahmen.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiel ist auch ein digitales Speichermedium, das maschinen- oder computer-lesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Eine Vorrichtung (10) zur Ermittlung einer Zeitbasis in einem mobilen Sendeempfänger (100) in einem Mobilkommunikationssystem (300), wobei das Mobilkommunikationssystem (300) zumindest einen Basisstations-Sendeempfänger (200) aufweist und wobei der mobile Sendeempfänger (100) ausgebildet ist, um Information in sich wiederholenden Funkrahmen mit dem Basisstations-Sendeempfänger (200) auszutauschen, umfassend

zumindest eine Schnittstelle (12), die ausgebildet ist, um mit dem zumindest einen Basisstations-Sendeempfänger (200) des Mobilkommunikationssystems (300) zu kommunizieren; und ein Kontrollmodul (14), das ausgebildet ist, um

die zumindest eine Schnittstelle (12) zu kontrollieren,

eine Synchronisation mit den sich wiederholenden Funkrahmen herzustellen,

einen auf die Funkrahmen synchronisierten Zähler inkrementell zu erhöhen,

eine Nachricht von dem zumindest einen Basisstations-Sendeempfänger (200) zu erhalten, wobei die Nachricht Information über eine lokale Zeitreferenz an dem Basisstations-Sendeempfänger (200) umfasst, und

den Zähler basierend auf der Information über die lokale Zeitreferenz anzupassen und so die Zeitbasis zu ermitteln,

wobei das Kontrollmodul (14) ausgebildet ist, um als Information über die lokale Zeitreferenz einen absoluten Zeitstempel und eine Identifikationsinformation über einen zu dem absoluten Zeitstempel in zeitlicher Relation stehenden Funkrahmen zu erhalten, und wobei das Kontrollmodul (14) ausgebildet ist, um den Zähler basierend auf dem absoluten Zeitstempel und dem zu dem absoluten Zeitstempel in zeitlicher Relation stehenden Funkrahmen anzupassen, wobei das Kontrollmodul (14) ferner ausgebildet ist, um basierend auf der Zeitbasis Signalwerte abzutasten oder wiederzugeben.

2. Vorrichtung (10) gemäß Anspruch 1, wobei sich der absolute Zeitstempel auf einen Funkrahmen in der Vergangenheit bezieht.

3. Vorrichtung (10) gemäß Anspruch 1, wobei sich der absolute Zeitstempel auf einen Funkrahmen in der Zukunft bezieht.

4. Vorrichtung (10) gemäß einem der vorangehenden Ansprüche, wobei das Kontrollmodul (14) ausgebildet ist, um bezüglich der Synchronisierung mit den sich wiederholenden Funkrahmen eine Information über eine Signallaufzeit zwischen dem Basisstations-Sendeempfänger (200) und dem mobilen Sendeempfänger (100) zu bestimmen, wobei das Kontrollmodul (14) ferner ausgebildet ist, um die Information über die Signallaufzeit bei der Bestimmung der Zeitbasis zu berücksichtigen.

5. Vorrichtung (10) gemäß einem der vorangehenden Ansprüche, wobei die Signalwerte Audio- oder Videosignale umfassen.

6. Vorrichtung (10) gemäß einem der vorangehenden Ansprüche, wobei die Information über die lokale Zeitreferenz ein Zeitstempel gemäß dem Precision Time Protocol ist.

7. Vorrichtung (10) gemäß einem der vorangehenden Ansprüche, wobei die Nachricht auf einer Applikationsprotokollschicht übertragen wird.

8. Eine Vorrichtung (20) zur Übertragung einer Zeitbasis von einem Basisstations-Sendeempfänger (200) an einen mobilen Sendeempfänger (100) in einem Mobilkommunikationssystem (300), umfassend

zumindest ein Sendeempfangsmodul (22), das ausgebildet ist, um mit dem zumindest einen mobilen Sendeempfänger (100) zu kommunizieren; und

ein Kontrollmodul (24), das ausgebildet ist, um

das Sendeempfängermodul (22) zu kontrollieren,

über das Sendeempfängermodul (22) Information in sich wiederholenden Funkrahmen mit dem mobilen Sendeempfänger (100) auszutauschen,

eine Nachricht von dem zumindest einen Basisstations-Sendeempfänger (200) an den mobilen Sendeempfänger (100) zu senden, wobei die Nachricht Information über eine lokale Zeitreferenz relativ zu den sich wiederholenden Funkrahmen umfasst, und so dem mobilen Sendeempfänger (100) die Zeitbasis bereitzustellen,

wobei das Kontrollmodul (24) ausgebildet ist, um als Information über die lokale Zeitreferenz einen absoluten Zeitstempel und eine Identifikationsinformation über einen zu dem absoluten Zeitstempel in zeitlicher Relation stehenden Funkrahmen zu senden, zum zeitsynchronen Abtasten oder Wiedergeben von Signalen.

9. Vorrichtung (20) gemäß Anspruch 8, wobei die Information über die lokale Zeitreferenz ein Zeitstempel gemäß dem Precision Time Protocol ist.

10. Vorrichtung (20) gemäß einem der Ansprüche 8 oder 9, wobei die Nachricht auf einer Applikationsprotokollschicht übertragen wird.

11. System (300) zum zeitsynchronen Abtasten oder Wiedergeben von Signalen mittels zwei oder mehr mobilen Sendeempfängern (100), umfassend die zwei oder mehr mobilen Sendeempfänger (100) mit je einer Vorrichtung (10) gemäß einem der Ansprüche 1 bis 7 und zumindest einen Basisstations-Sendeempfänger (200) mit einer Vorrichtung (20) gemäß einem der Ansprüche 8 bis 10.

12. Verfahren zur Ermittlung einer Zeitbasis in einem mobilen Sendeempfänger (100) in einem Mobilkommunikationssystem (300), wobei das Mobilkommunikationssystem (300) zumindest einen Basisstations-Sendeempfänger (200) aufweist, umfassend

> Kommunizieren (32) mit dem zumindest einen Basisstations-Sendeempfänger (200) des Mobilkommunikationssystems (300);
> Austauschen (34) von Information in sich wiederholenden Funkrahmen mit dem Basisstations-Sendeempfänger (200);
> Herstellen (36) einer Synchronisation mit den sich wiederholenden Funkrahmen;
> inkrementelles Erhöhen (38) eines auf die Funkrahmen synchronisierten Zählers;
> Erhalten (40) einer Nachricht von dem zumindest einen Basisstations-Sendeempfänger (200), wobei die Nachricht Information über eine lokale Zeitreferenz an dem Basisstations-Sendeempfänger (200) umfasst; und
> Ermitteln (42) der Zeitbasis durch Anpassen des Zählers basierend auf der Information über die lokale Zeitreferenz,
> wobei als Information über die lokale Zeitreferenz ein absoluter Zeitstempel und eine Identifikationsinformation über einen zu dem absoluten Zeitstempel in zeitlicher Relation stehenden Funkrahmen verwendet wird,
> und wobei der Zähler basierend auf dem absoluten Zeitstempel und dem zu dem absoluten Zeitstempel in zeitlicher Relation stehenden Funkrahmen angepasst wird,
> Abtasten oder Wiedergeben von Signalwerten basierend auf der Zeitbasis.

**13.** Ein Verfahren zur Übertragung einer Zeitbasis von einem Basisstations-Sendeempfänger (200) an einen mobilen Sendeempfänger (100) in einem Mobilkommunikationssystem (300), umfassend

> Kommunizieren (52) mit dem zumindest einen mobilen Sendeempfänger (100);
> Austauschen (54) von Information in sich wiederholenden Funkrahmen mit dem mobilen Sendeempfänger (100); und
> Bereitstellen (56) der Zeitbasis durch Senden einer Nachricht von dem zumindest einen Basisstations-Sendeempfänger (200) an den mobilen Sendeempfänger (100), wobei die Nachricht Information über eine lokale Zeitreferenz relativ zu den sich wiederholenden Funkrahmen umfasst, wobei als Information über die lokale Zeitreferenz ein absoluter Zeitstempel und eine Identifikationsinformation über einen zu dem absoluten Zeitstempel in zeitlicher Relation stehenden Funkrahmen zum zeitsynchronen Abtasten oder Wiedergeben von Signalen verwendet wird.

**14.** Computerprogramm mit einem Programmcode zum Durchführen zumindest eines der Verfahren nach Ansprüchen 12 oder 13, wenn der Programmcode auf einem Computer, einem Prozessor, einem Controller oder einer programmierbaren Hardwarekomponente ausgeführt wird.

**Claims**

**1.** A device (10) for determining a time base in a mobile transceiver (100) in a mobile communication system (300), wherein the mobile communication system (300) comprises at least one base station transceiver (200) and wherein the mobile transceiver (100) is configured to exchange information in repeating radio frames with the base station transceiver (200), comprising

> at least one interface (12) configured to communicate with the at least one base station transceiver (200) of the mobile communication system (300); and
> a control module (14) configured to

>> control the at least one interface (12),
>> establish a synchronization with the repeating radio frames,
>> incrementally increment a counter synchronized to the radio frames,
>> receive a message from the at least one base station transceiver (200), the message comprising information on a local time reference at the base station transceiver (200), and
>> adjust the counter based on the information on the local time reference and thus determine the time base,

> wherein the control module (14) is configured to receive as information on the local time reference an absolute time stamp and identification information on a radio frame standing in temporal relation to the absolute time stamp, and wherein the control module (14) is configured to adjust the counter based on the absolute time stamp and the radio frame standing in temporal relation to the absolute time stamp, wherein the control module (14) is further configured to sample or reproduce signal values based on the time base.

**2.** The device (10) according to claim 1, wherein the absolute time stamp refers to a radio frame in the past.

**3.** The device (10) according to claim 1, wherein the absolute time stamp refers to a radio frame in the future.

4. The device (10) according to any of the preceding claims, wherein the control module (14) is configured to determine information on a signal runtime between the base station transceiver (200) and the mobile transceiver (100) with respect to the synchronization with the repeating radio frames, wherein the control module (14) is further configured to take the information on the signal runtime into account in determining the time base.

5. The device (10) according to any of the preceding claims, wherein the signal values comprise audio or video signals.

6. The device (10) according to any of the preceding claims, wherein the information on the local time reference is a time stamp according to the Precision Time Protocol.

7. The device (10) according to any of the preceding claims, wherein the message is transmitted on an application protocol layer.

8. A device (20) for transmitting a time base from a base station transceiver (200) to a mobile transceiver (100) in a mobile communication system (300), comprising

   at least one transceiver module (22) configured to communicate with the at least one mobile transceiver (100); and
   a control module (24) configured to

      control the transceiver module (22),
      exchange information in repeating radio frames with the mobile transceiver (100) via the transceiver module (22),
      send a message from the at least one base station transceiver (200) to the mobile transceiver (100), wherein the message comprises information on a local time reference relative to the repeating radio frames, so as to provide the time base to the mobile transceiver (100),
      wherein the control module (24) is configured to send, as information on the local time reference, an absolute time stamp and identification information on a radio frame standing in temporal relation to the absolute time stamp, for time-synchronously sampling or reproducing signals.

9. The device (20) according to claim 8, wherein the information on the local time reference is a time stamp according to the Precision Time Protocol.

10. The device (20) according to any of claims 8 or 9, wherein the message is transmitted on an application protocol layer.

11. A system (300) for time-synchronously sampling or reproducing signals by means of two or more mobile transceivers (100), comprising the two or more mobile transceivers (100) each comprising a device (10) according to any of claims 1 to 7 and at least one base station transceiver (200) comprising a device (20) according to any of claims 8 to 10.

12. A method for determining a time base in a mobile transceiver (100) in a mobile communication system (300), wherein the mobile communication system (300) comprises at least one base station transceiver (200) comprising

   communicating (32) with the at least one base station transceiver (200) of the mobile communication system (300);
   exchanging (34) information in repeating radio frames with the base station transceiver (200);
   establishing (36) a synchronization with the repeating radio frames;
   incrementally increment (38) a counter synchronized to the radio frames;
   receiving (40) a message from the at least one base station transceiver (200), the message comprising information on a local time reference at the base station transceiver (200); and
   determining (42) the time base by adjusting the counter based on the information on the local time reference,
   wherein an absolute time stamp and identification information on a radio frame standing in temporal relation to the absolute time stamp are used as information on the local time reference, and wherein the counter is adjusted based on the absolute time stamp and the radio frame standing in temporal relation to the absolute time stamp,
   sampling or reproducing signal values based on the time base.

13. A method for transmitting a time base from a base station transceiver (200) to a mobile transceiver (100) in a mobile communication system (300), comprising

   communicating (52) with the at least one mobile transceiver (100);
   exchanging (54) information in repeating radio frames with the mobile transceiver (100); and
   providing (56) the time base by sending a message from the at least one base station transceiver (200) to the mobile transceiver (100), the message comprising information on a local time reference relative to the repeating radio frames, wherein an absolute time stamp and identification information on a radio frame standing in temporal relation to the absolute time stamp are used as information on the local time reference for time-synchronously sampling or reproducing signals.

14. A computer program having a program code for executing at least one of the methods according to claims 12 or 13, when the program code is executed on a computer, a processor, a controller or a programmable hardware component.

**Revendications**

1. Dispositif (10) pour déterminer une base de temps dans un émetteur-récepteur mobile (100) dans un système de communication mobile (300), dans lequel le système de communication mobile (300) comprend au moins un émetteur-récepteur de station de base (200) et dans lequel l'émetteur-récepteur mobile (100) est configuré pour échanger une information dans des trames radio répétitives avec l'émetteur-récepteur de station de base (200), comprenant

　　au moins une interface (12) configurée pour communiquer avec l'au moins un émetteur-récepteur de station de base (200) du système de communication mobile (300) ; et
　　un module de contrôle (14) configuré pour

　　　　contrôler l'au moins une interface (12),
　　　　établir une synchronisation avec les trames radio répétitives,
　　　　augmenter de manière incrémentale un compteur synchronisé sur les trames radio,
　　　　recevoir un message de l'au moins un émetteur-récepteur de station de base (200), le message comprenant une information sur une référence temporelle locale au niveau de l'émetteur-récepteur de station de base (200), et
　　　　ajuster le compteur sur la base de l'information sur la référence temporelle locale et déterminer ainsi la base de temps,

　　dans lequel le module de contrôle (14) est configuré pour recevoir, en tant qu'information sur la référence temporelle locale, un horodatage absolu et une information d'identification sur une trame radio étant en relation temporelle avec l'horodatage absolu, et dans lequel le module de contrôle (14) est configuré pour ajuster le compteur sur la base de l'horodatage absolu et de la trame radio étant en relation temporelle avec l'horodatage absolu, le module de contrôle (14) étant en outre configuré pour échantillonner ou reproduire des valeurs de signal sur la base de la base de temps.

2. Dispositif (10) selon la revendication 1, dans lequel l'horodatage absolu se réfère à une trame radio dans le passé.

3. Dispositif (10) selon la revendication 1, dans lequel l'horodatage absolu se réfère à une trame radio dans le futur.

4. Dispositif (10) selon l'une des revendications précédentes, dans lequel le module de contrôle (14) est configuré pour déterminer, en ce qui concerne la synchronisation avec les trames radio répétitives, une information sur un temps de propagation du signal entre l'émetteur-récepteur de station de base (200) et l'émetteur-récepteur mobile (100), le module de contrôle (14) étant en outre configuré pour prendre en compte l'information sur le temps de propagation du signal dans la détermination de la base de temps.

5. Dispositif (10) selon l'une des revendications précédentes, dans lequel les valeurs de signal comprennent des signaux audio ou vidéo.

6. Dispositif (10) selon l'une des revendications précédentes, dans lequel l'information sur la référence temporelle locale est un horodatage selon le Precision Time Protocol.

7. Dispositif (10) selon l'une des revendications précédentes, dans lequel le message est transmis sur une couche de protocole d'application.

8. Dispositif (20) pour transmettre une base de temps d'un émetteur-récepteur de station de base (200) à un émetteur-récepteur mobile (100) dans un système de communication mobile (300), comprenant

　　au moins un module émetteur-récepteur (22) configuré pour communiquer avec l'au moins un émetteur-récepteur mobile (100) ; et
　　un module de contrôle (24) configuré pour

　　　　contrôler le module émetteur-récepteur (22),
　　　　échanger une information dans des trames radio répétitives avec l'émetteur-récepteur mobile (100) par l'intermédiaire du module émetteur-récepteur (22),
　　　　transmettre un message de l'au moins un émetteur-récepteur de station de base (200) à l'émetteur-récepteur mobile (100), le message comprenant une information sur une référence temporelle locale par rapport aux trames radio répétitives, fournissant ainsi la base de temps à l'émetteur-récepteur mobile (100),

le module de contrôle (24) étant configuré pour transmettre, en tant qu'information sur la référence temporelle locale, un horodatage absolu et une information d'identification sur une trame radio étant en relation temporelle avec l'horodatage absolu, pour échantillonner ou reproduire des signaux de manière synchronisée dans le temps.

9. Dispositif (20) selon la revendication 8, dans lequel l'information sur la référence temporelle locale est un horodatage selon le Precision Time Protocol.

10. Dispositif (20) selon l'une des revendications 8 ou 9, dans lequel le message est transmis sur une couche de protocole d'application.

11. Système (300) pour échantillonner ou reproduire des signaux de manière synchronisée dans le temps au moyen de deux ou plus émetteurs-récepteurs mobiles (100), comprenant les deux ou plus émetteurs-récepteurs mobiles (100) ayant chacun un dispositif (10) selon l'une des revendications 1 à 7 et au moins un émetteur-récepteur de station de base (200) comprenant un dispositif (20) selon l'une des revendications 8 à 10.

12. Procédé pour déterminer une base de temps dans un émetteur-récepteur mobile (100) dans un système de communication mobile (300), le système de communication mobile (300) ayant au moins un émetteur-récepteur de station de base (200), comprenant le fait de

communiquer (32) avec l'au moins un émetteur-récepteur de station de base (200) du système de communication mobile (300) ;
échanger (34) une information dans des trames radio répétitives avec l'émetteur-récepteur de station de base (200) ;
établir (36) une synchronisation avec les trames radio répétitives ;
augmenter (38) de manière incrémentale un compteur synchronisé sur les trames radio ;
recevoir (40) un message de l'au moins un émetteur-récepteur de station de base (200), le message comprenant une information sur une référence temporelle locale au niveau de l'émetteur-récepteur de station de base (200); et
déterminer (42) la base de temps en ajustant le compteur sur la base de l'information sur la référence temporelle locale,
dans lequel un horodatage absolu et une information d'identification sur une trame radio étant en relation temporelle avec l'horodatage absolu sont utilisés comme information sur la référence temporelle locale,
et dans lequel le compteur est ajusté sur la base de l'horodatage absolu et de la trame radio étant en relation temporelle avec l'horodatage absolu, échantillonner ou reproduire des valeurs de signal sur la base de la base de temps.

13. Procédé pour transmettre une base de temps d'un émetteur-récepteur de station de base (200) à un émetteur-récepteur mobile (100) dans un système de communication mobile (300), comprenant le fait de

communiquer (52) avec l'au moins un émetteur-récepteur mobile (100) ;
échanger (54) une information dans des trames radio répétitives avec l'émetteur-récepteur mobile (100) ; et
fournir (56) la base de temps en transmettant un message de l'au moins un émetteur-récepteur de station de base (200) à l'émetteur-récepteur mobile (100), le message comprenant une information sur une référence temporelle locale par rapport aux trames radio répétitives, dans lequel un horodatage absolu et une information d'identification sur une trame radio étant en relation temporelle avec l'horodatage absolu sont utilisés comme information sur la référence temporelle locale pour échantillonner ou reproduire des signaux de manière synchronisée dans le temps.

14. Programme d'ordinateur présentant un code de programme pour exécuter au moins un des procédés selon les revendications 12 ou 13 lorsque le code de programme est exécuté sur un ordinateur, un processeur, un contrôleur ou un composant matériel programmable.

Fig. 1

EP 3 616 342 B1

Fig. 2

Kommunizieren mit dem zumindest einen
Basisstations-Sendeempfänger

32

Austauschen von Information in sich
wiederholenden Funkrahmen

34

Herstellen einer Synchronisation mit den sich
wiederholenden Funkrahmen

36

Inkrementelles Erhöhen eines Zählers

38

Erhalten einer Nachricht mit Information
über lokale Zeitreferenz

40

Ermitteln der Zeitbasis durch Anspassen des
Zählers auf die Zeitreferenz

42

# Fig. 3

Kommunizieren mit dem zumindest einen
mobilen Sendeempfänger
52

Austauschen von Information in sich
wiederholenden Funkrahmen
54

Bereitstellen der Zeitbasis durch Senden
einer Nachricht mit lokaler Zeitreferenz
56

Fig. 4

**EP 3 616 342 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011216660 A1
- US 2009006882 A1
- US 2016165558 A1
- US 2016345281 A1
- WO 2015126956 A1